# EUROPÄISCHE PATENTSCHRIFT

(11) **EP 2 033 828 B1**
(45) Veröffentlichungstag und Bekanntmachung des Hinweises auf die Patenterteilung: **19.01.2011**
(21) Anmeldenummer: 08015685.4
(22) Anmeldetag: 05.09.2008
(51) Int. Cl.: B60J 11/00

(54) **Schutzdach eines Daches eines Wohnwagens**
Protective roof for a mobile home
Toit de protection d'un toit d'une caravane

(30) Priorität: 07.09.2007 DE 102007042684
(43) Veröffentlichungstag der Anmeldung: 11.03.2009
(73) Patentinhaber: Ruhe, Torsten, 31737 Rinteln (DE)
(72) Erfinder: Ruhe, Torsten, 31737 Rinteln (DE)
(74) Vertreter: Patentanwälte Thömen & Körner

(56) Entgegenhaltungen:
- EP-A- 1 405 748
- DE-A1-102004 018 687
- DE-A1-102005 011 235
- DE-U1- 9 200 054
- DE-U1- 9 212 548
- DE-U1- 20 119 163
- DE-U1-202004 012 361
- DE-U1-202006 011 760
- DE-U1-202006 016 095
- GB-A- 2 235 665
- US-A- 5 834 381

## Beschreibung

Die Erfindung betrifft ein Schutzdach eines Daches eines Wohnwagens nach dem Oberbegriff des Anspruchs 1.

Derartige Schutzdächer werden benutzt, um längerfristig abgestellte Fahrzeugaufbauten, insbesondere die Dächer von Wohnwagen, zu denen nachfolgend auch Reisemobile, Mobilheime oder Boote gezählt werden, vor Umwelteinflüssen zu schützen. Insbesondere Hagelschäden stellen nicht hinnehmbare Gefahren für die abgestellten Fahrzeuge dar. Einfach über die Fahrzeugoberseiten geworfene Planen reichen zum ausreichenden Schutz der Fahrzeugoberseiten nicht, da diese Planen, insbesondere durch Windeinflüsse, an den Oberseiten der Fahrzeuge scheuern können und keinen ausreichenden Schutz vor insbesondere Hagelschäden bieten. Auch sind in der Regel die Oberseiten von Wohnwagen mit zusätzlichen Aufbauten, wie Dachluken, Schornsteinstutzen oder Antennen versehen, die durch einfaches Auflegen von Planen nicht hinreichend zu schützen sind.

Aus der DE 92 01 563 U1 ist eine Vorrichtung zum Spannen einer Plane für ein Wohnwagendach bekannt, bei der eine Plane im Abstand über ein Wohnwagendach aufspannbar ist. Dieses Schutzdach gewährleistet zwar einen Abstand zwischen der Plane und insbesondere den Aufbauten des Wohnwagendachs, sie ist jedoch nicht geeignet, in kürzester Zeit an einem Wohnwagendach befestigt zu werden und ist zudem in der Herstellung aufwendig und daher teuer. Wenn es nötig ist, eine Vielzahl von Fahrzeugaufbauten durch Planen zu schützen, ist diese Schutzdach zu aufwendig.

Ähnliche Schutzdächer, bei denen Planen temporär über das Dach des Wohnwagens gespannt werden, sind aus der DE 88 03 610 U1, der DE 85 28 473 U1 und der DE 297 09 641 U1 bekannt. Aus der DE 10 2004 018 687 A1 ist eine Hagelschutzmatte für Kraftfahrzeuge bekannt, welche einen mehrschichtigen Aufbau mit einer Zwischenschicht aus Schaumstoff aufweist.

Nachteilig an diesen Schutzdächern ist die aufwändige und zeitintensive Montage und der Umstand, dass auf plötzlich auftretende Naturereignisse, wie Hagel, nicht rechtzeitig reagiert werden kann, da Schäden oft eintreten, bevor das Schutzdach aufgespannt werden kann. Außerdem sind diese Lösungen nur für stehende bzw. abgestellte Wohnwagen geeignet. Ein Schutz des Daches des Wohnwagens während der Fahrt ist mit derartigen Schutzdächern nicht möglich.

Aufgabe der Erfindung ist es daher, ein Schutzdach der eingangs genannten Art zu schaffen, das einfach und dauerhaft an der Oberseite des Daches eines Wohnwagens anbringbar ist und auch über einen längeren Zeitraum einen sicheren Schutz des Daches vor aufprallenden Objekten gewährleistet.

Diese Aufgabe wird mit einer gattungsgemäßen Schutzdach gelöst, welche die Merkmale des kennzeichnenden Teils des Anspruchs 1 aufweist.

Beim erfindungsgemäßen Schutzdach besteht das Schutzdach wenigstens aus der Plane und aus einem zwischen Plane und Dach angeordneten, mit der Plane verbundenen Schaumstoffkörper, wobei das Schutzdach mit dem Dach fest verspannt oder vorzugsweise verklebt ist.

Hierdurch wird erreicht, dass das Schutzdach permanent mit dem Dach des Wohnwagens verbunden ist, wodurch sich eine Reihe von überraschenden Vorteilen ergibt. Da das Schutzdach permanent mit dem Dach des Wohnwagens verbunden ist, spielt es nun keine Rolle mehr, zu welchem, auch noch so plötzlichen Zeitpunkt ein Ereignis eintritt, bei dem Fremdkörper auf das Dach treffen. Vor auftreffenden Fremdkörpern, wie Hagelkörnern, umher fliegenden Kleinteilen, böswillig geworfenen Steinen oder dergleichen, welche jederzeit auf das Dach des Wohnwagens auftreffen und dieses beschädigen können, schützt das erfindungsgemäße Schutzdach sicher und auf einfachste Weise.

Ein überraschender Nebeneffekt des Schutzdaches ergibt sich aus einer zusätzlichen Schall- und Wärmeisolierung des Schaumstoffkörpers. Während bislang Bewohner eines Wohnwagens, zu dem erfindungsgemäß auch ein Reisemobil, Mobilheim oder Boot zählt, beim Einschlafen unter auf das Dach lautstark niederprasselndem Regen zu leiden hatten, sorgt das erfindungsgemäße Schutzdach nun dafür, dass die Lautstärke aufklatschender Regentropfen deutlich gedämpft wird, so dass nunmehr keine Schlafstörungen durch Niederschläge zu befürchten sind. Auch die zusätzliche Wärmeisolierung durch den Schaumstoffkörper macht sich positiv bemerkbar. Schließlich wird durch das erfindungsgemäße Schutzdach eine zusätzliche Abdichtung des Daches und seiner Aufbauten erreicht, da das Schutzdach fest mit dem Dach verspannt oder vorzugsweise vollflächig mit dem Dach verklebt wird und eventuell bestehende Undichtigkeiten beseitigt werden.

Schließlich ist an der erfindungsgemäßen Ausgestaltung des Schutzdaches positiv, dass praktisch jeder Wohnwagen bzw. jedes Reisemobil, Mobilheim oder Boot mit dem Schutzdach nach gerüstet werden kann, wobei die anfallenden Kosten hierfür äußerst gering sind.

Bevorzugterweise sind Ränder des Schutzdaches mit Seitenwänden des Wohnwagens und mit den Anbauten dichtend fest verspannt oder vorzugsweise verklebt. Hierdurch wird die abdichtende und isolierende Wirkung des erfindungsgemäßen Schutzdaches erhöht.

Vorteilhafterweise ist der Schaumstoffkörper einstückig an die Plane angeformt. Hierdurch ist das erfindungsgemäße Schutzdach besonders einfach zu handhaben und kann in einem Stück bearbeitet und auf dem Dach des Wohnwagens verlegt werden. Diese Ausgestaltung lässt sich noch dadurch ergänzen, dass vorgesehen ist, dass der Schaumstoffkörper an die Plane angeschäumt ist.

In praktischen Ausgestaltungen der Ereindung weist das Schutzdach ein Gewicht von 1300 bis 1800 g/m² auf.

Vorteilhafterweise weist der Schaumstoffkörper eine Dicke von 3 - 30 mm, vorzugsweise von 3 mm auf.

Bevorzugterweise besteht die Plane aus einem Planenstoff, dessen Material Polyethersulfon (PES) oder Polyvinylchlorid (PVC) ist. Diese Materialien haben sich als besonders stabil und resistent gegen UV-Strahlung erwiesen und lassen sich einfach verarbeiten.

Bevorzugterweise besteht der Schaumstoffkörper aus Polystyrol, aus einem geschäumten Elastomer, aus einem PES-Schaum oder aus einem PVC-Schaum. Je nach konkreter Anforderung an das Schutzdach sind diese Materialien besonders gut geeignet, die Aufgabe des Schutzdaches, insbesondere in Hinblick auf den Schlagschutz zu erfüllen.

Vorteilhafterweise ist das Schutzdach dreischichtig ausgebildet und weist eine obere Plane und eine untere Plane auf, zwischen denen der Schaumstoffkörper angeordnet ist. Eine derartige, dreischichtige Ausgestaltung kann insbesondere in Bezug auf das Verkleben vorteilhaft sein, da sich die Materialien von Planen leichter mit dem Dach verkleben lassen. Bestimmte Schaumstoffe sind bezüglich der Verbindung mit Klebstoffen empfindlicher als Materialien von Planen.

Bevorzugterweise weist das Schutzdach eine weiße oder hellgraue Farbe auf. Dies ist hinsichtlich des Reflexionsvermögens von Vorteil, da einstrahlendes Licht durch die weiße oder hellgraue Farbe reflektiert und nicht absorbiert wird, wodurch sich ein klimatischer, d. h, isolierender Vorteil ergibt.

Weitere Vorteile und Ausgestaltungen der Erfindung ergeben sich aus der nachfolgenden Beschreibung, der Zeichnung und den Ansprüchen. In der Zeichnung zeigt:
Fig. 1 ein Ausführungsbeispiel eines auf einem Dach eines Wohnwagens aufliegenden erfindungsgemäßen Schutzdachs im Querschnitt,
Fig. 2 einen Querschnitt durch das Schutzdach aus Fig. 1 in vergrößerter Ansicht,
Fig. 3 einen Querschnitt durch ein zweites Ausführungsbeispiel eines erfindungsgemäßen Schutzdachs.

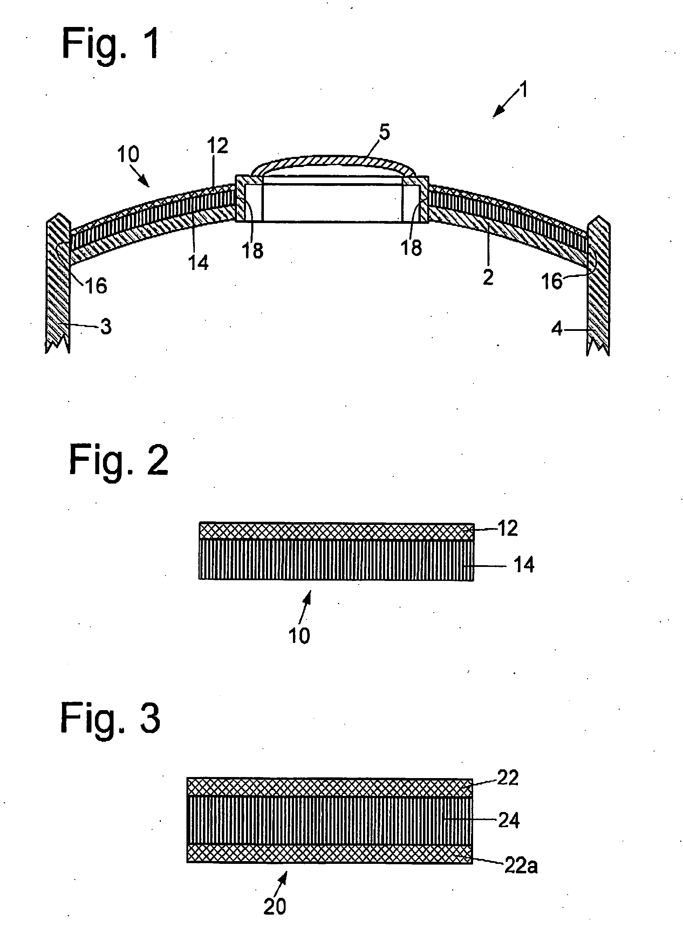

In Fig. 1 ist schematisch im Querschnitt eine Teilansicht eines Wohnwagens 1 mit einem Dach 2 dargestellt. Das Dach 2 ist mit Seitenwänden 3, 4 des Wohnwagens 1 in an sich bekannter Weise verbunden. Auf dem Dach 2 sind dieses überragende Aufbauten angeordnet, von denen eine Dachluke 5 schematisch dargestellt ist. Auf dem Dach 2 ist ein erstes Ausführungsbeispiel eines erfindungsgemäßen Schutzdaches 10 angeordnet. Das Schutzdach 10 besteht aus einer wasserdichten Plane 12 und aus einem unter der Plane 12 angeordneten Schaumstoffkörper 14. Die Plane 12 ist untrennbar mit dem Schaumstoffkörper 14 verbunden. Der Schaumstoffkörper 14 ist mit dem Dach 2 mittels eines Spezialklebers verklebt. Zweckmäßigerweise sind Ränder 16, 18 des Schutzdaches 10 mit den Seitenwänden 3, 4 bzw. mit der Dachluke 5 dichtend verklebt.

Für die Aufbauten notwendige, durch die Ränder 18 begrenzte Ausschnitte werden einfach in die Plane 12 und in den darunter angeordneten Schaumstoffkörper 14 eingeschnitten. Es hat sich als zweckmäßig erwiesen, die Aufbauten, wie die Dachluke 5, eine Rehling, Antennen oder andere An- und Aufbauten, vor dem Auflegen des Schutzdachs 10 und vor dem Verkleben des Schutzdachs 10 mit dem Dach 2 zu demontieren und nach dem Verkleben des Schutzdachs 10 mit dem Dach 2 wieder auf das Dach 2 aufzusetzen und neu einzudichten. Bei diesem neuen Abdichten der Anbauten erfolgt zweckmäßigerweise auch das Verkleben der Anbauten mit den Rändern 16, 18 des Schutzdaches 10.

In Fig. 2 ist das Schutzdach 10 aus Fig. 1 in gegenüber Fig. 1 vergrößerter Ansicht im Querschnitt als Ausriss dargestellt. Die Plane 12 besteht aus einem Planenstoff, dessen Material Polyethersulfon (PES) ist. Ein derartiger Planenstoff aus PES ist beispielsweise unter der Handelsbezeichnung "Valmex" erhältlich. An die Plane 12 ist der Schaumstoffkörper 14 einstückig angeformt. Der Schaumstoffkörper 14 ist dabei direkt an die Plane 12 angeschäumt. Es hat sich gezeigt, dass eine Dicke von 3 mm des Schaumstoffkörpers 14 ausreichend ist, um das Dach 2 vor aufprallenden Fremdkörpern, wie Hagelkörnern, sicher zu schützen. Das Schutzdach 10 weist ein Gewicht von 1300 g/m² auf.

Abweichend von dieser Konstellation sind aber auch andere Bemaßungen bzw. Materialien einsetzbar. So kann die Plane 12 aus PVC bestehen. Der Schaumstoffkörper 14 kann eine Dicke von 3 - 30 mm aufweisen und vorteilhafterweise aus Polystyrol, aus einem geschäumten Elastomer, aus einem PES-Schaum oder aus einem PVC-Schaum bestehen. Eine größere Dicke des Schaumstoffkörpers 14 ist insbesondere dann von Vorteil, wenn der Schaumstoffkörper 14 neben seiner prallschützenden Wirkung auch noch schalldämmende Eigenschaften aufweisen soll. Ein zusätzlicher Schallschutz macht sich besonders vorteilhaft über einem Alkoven des als Reisemobil ausgebildeten Wohnwagens bemerkbar, da auf das Dach 2 niederprasselnder Regen so laut sein kann, dass ein Einschlafen einer im Alkoven liegenden Person gestört ist. Der Schaumstoffkörper 14 sorgt dafür, dass das Geräusch fallender Niederschläge signifikant gedämpft wird.

In Fig. 3 ist ein zweites Ausführungsbeispiel eines erfindungsgemäßen Schutzdachs 20 im Querschnitt als Ausriss dargestellt. Das Schutzdach 20 ist grundsätzlich wie das Schutzdach 10 aus den Fig. 1 und 2 aufgebaut und erfüllt den selben Zweck, so dass die Ausführungen zu den Fig. 1, 2 auch für das Schutzdach 20 gelten. Im Gegensatz zum Schutzdach 10 ist das Schutzdach 20 dreischichtig aufgebaut und weist eine obere Plane 22 und eine untere Plane 22a auf, zwischen denen der Schaumstoffkörper 24 eingebettet ist. Bezüglich der Dicken, Gewichte und Materialien von Schutzdach 20, der Planen 22, 22a und des Schaumstoffkörpers 24 wird auf die Ausführungen zu den Fig. 1 und 2 Bezug genommen. Lediglich das Gewicht des Schutzdaches 20 ist geringfügig höher als das des Schutzdaches 10 und beträgt 1800 g/m².

Die zusätzliche, unten angeordnete Plane 22a dient der zusätzlichen Abdichtung des Daches 2 und einem zusätzlichen Schlagschutz vor aufprallenden Fremdkörpern. Außerdem kann eine derartige, dreischichtige Ausgestaltung in Bezug auf das Verkleben vorteilhaft sein, da sich die Materialien von Planen leichter mit dem Dach 2 verkleben lassen. Bestimmte Schaumstoffe sind bezüglich der Verbindung mit Klebstoffen empfindlicher als Materialien von Planen.

Beide Schutzdächer 10, 12 weisen eine weiße oder hellgraue Farbe auf, welche bezüglich des Reflexionsvermögens von Vorteil ist, da einstrahlendes Licht durch die weiße oder hellgraue Farbe reflektiert und nicht absorbiert wird, wodurch sich auch ein klimatischer Vorteil ergibt.

### Bezugszeichenliste:

- 1: Wohnwagen
- 2: Dach
- 3: Seitenwand
- 4: Seitenwand
- 5: Dachluke
- 10: Schutzdach
- 12: Plane
- 14: Schaumstoffkörper
- 16: Rand
- 18: Rand
- 20: Schutzdach
- 22: Plane
- 22a: Plane
- 24: Schaumstoffkörper

## Patentansprüche

1. Fahrzeugaufbau mit einem Schutzdach (10; 20), insbesondere, eines Daches (2) eines Wohnwagens (1) mit auf dem Dach (2) angeordneten Aufbauten, wie Dachluken (5) oder dergleichen, wobei das Schutzdach (10; 20) wenigstens aus einer wasserdichten Plane (12; 22, 22a) und aus einem zwischen Plane (12; 22, 22a) und Fahrzeugaufbau (2) angeordneten, mit der Plane (12; 22, 22a) verbundenen Schaumstoffkörper (14; 24) besteht, wobei das Schutzdach (10; 20) mit dem verbunden ist, dass es (2) Fahrzeugaufban fest und permanent verspannt oder fest und permanent verklebt ist.

2. Fahrzeuganfban mit einem Schutzdach nach Anspruch 1, **dadurch gekennzeichnet, dass** Ränder (16, 18) des Schutzdaches (10; 20) mit Seitenwänden (3, 4) des Wohnwagens (1) und mit den Anbauten (5) dichtend fest verspannt oder vorzugsweise verklebt sind.

3. Fahrzeugaufbau mit einem Schutzdach nach Anspruch 1 oder 2, **dadurch gekennzeichnet, dass** der Schaumstoffkörper (14; 29) einstückig an die Plane (12; 22, 22a) angeformt ist.

4. Fahrzeugaufbau mit einem Schutzdach nach Anspruch 3, **dadurch gekennzeichnet, dass** der Schaumstoffkörper (14; 24) an die Plane (12; 22, 22a) angeschäumt ist.

5. Fahrzeugaufbau mit einem Schutzdach nach einem der Ansprüche 1 bis 4, **dadurch gekennzeichnet, dass** das Schutzdach (10; 20) ein Gewicht von 1300 bis 1800 g/m² aufweist.

6. Fahrzeugaufbau mit einem Schutzdach nach einem der Ansprüche 1 bis 5, **dadurch gekennzeichnet, dass** der Schaumstoffkörper (14; 24) eine Dicke von 3 - 30 mm, vorzugsweise von 3 mm aufweist.

7. Fahrzeugaufbau mit einem Schutzdach nach einem der Ansprüche 1 bis 6, **dadurch gekennzeichnet, dass** die Plane (12; 22) aus einem Planenstoff besteht, dessen Material Polyethersulfon (PES) oder Polyvinylchlorid (PVC) ist.

8. Fahrzeugaufbau mit einem Schutzdach nach einem der Ansprüche 1 bis 7, **dadurch gekennzeichnet, dass** der Schaumstoffkörper (14; 24) aus Polystyrol, aus einem geschäumten Elastomer, aus einem PES-Schaum oder aus einem PVC-Schaum besteht.

9. Fahrzeugaufbau mit einem Schutzdach nach einem der Ansprüche 1 bis 8, **dadurch gekennzeichnet, dass** das Schutzdach (20) dreischichtig ausgebildet ist und eine obere Plane (22) und eine untere Plane (22a) aufweist, zwischen denen der Schaumstoffkörper (24) angeordnet ist.

## Claims

1. A vehicle structure having a protective roof (10; 20), in particular of a roof (2) of a caravan (1) having structures arranged on the roof (2), such as roof lights (5) or the like, wherein the protective roof (10; 20) comprises at least a watertight tarpaulin (12; 22, 22a) and a foam body (14; 24) arranged between tarpaulin (12; 22, 22a) and vehicle structure and connected to tarpaulin (12; 22, 22a), wherein the protective roof (10; 20) is connected to the vehicle structure, that it is fixedly and permanently braced or fixedly and permanently glued.

2. The vehicle structure having a protective roof according to Claim 1, **characterised in that** edges (16, 18) of the protective roof (10; 20) are fixedly braced or preferably glued in a sealing manner to side walls (3, 4) of the caravan (1) and to the structures (5).

3. The vehicle structure having a protective roof according to Claim 1 or 2, **characterised in that** the foam body (14; 24) is formed in one piece onto the tarpaulin (12; 22, 22a).

4. The vehicle structure having a protective roof according to Claim 3, **characterised in that** the foam body (14; 24) is foamed onto the tarpaulin (12; 22, 22a).

5. The vehicle structure having a protective roof according to one of Claims 1 to 4, **characterised in that** the protective roof (10; 20) has a weight of 1300 to 1800 g/m².

6. The vehicle structure having a protective roof according to one of Claims 1 to 5, **characterised in that** the protective body (14; 24) has a thickness of 3 - 30 mm, preferably of 3 mm.

7. The vehicle structure having a protective roof according to one of Claims 1 to 6, **characterised in that** the tarpaulin (12; 22) comprises a tarpaulin material, the material of which is polyethersulfone (PES) or polyvinyl chloride (PVC).

8. The vehicle structure having a protective roof according to one of Claims 1 to 7, **characterised in that** the foam body (14; 24) comprises polystyrene, a foamed elastomer, a PES foam or a PVC foam.

9. The vehicle structure having a protective roof according to one of Claims 1 to 8, **characterised in that** the protective roof (20) is formed in three layers and has an upper tarpaulin (22) and a lower tarpaulin (22a) between which the foam body (24) is arranged.

## Revendications

1. Carrosserie de véhicule avec un auvent (10 ; 20), en particulier d'un toit (2) d'une caravane (1) avec des superstructures disposées sur le toit (2), telles que des écoutilles (5) ou similaires, l'auvent (10 ; 20) se composant au moins d'une bâche (12 ; 22, 22a) étanche à l'eau et d'un corps en mousse (14 ; 24) disposé entre la bâche (12 ; 22, 22a) et la carrosserie de véhicule (2) et raccordé à la bâche (12 ; 22, 22a), l'auvent (10 ; 20) étant haubané de façon fixe et permanente ou étant collé de façon fixe et permanente à la carrosserie de véhicule (2).

2. Carrosserie de véhicule avec un auvent selon la revendication 1, **caractérisée en ce que** des bords (16, 18) de l'auvent (10 ; 20) sont haubanés ou de préférence collés de façon fixe et étanche à des parois latérales (3, 4) de la caravane (1) et avec les constructions surajoutées (5).

3. Carrosserie de véhicule avec un auvent selon la revendication 1 ou la revendication 2, **caractérisée en ce que** le corps en mousse (14 ; 24) est formé d'une seule pièce sur la bâche (12 ; 22, 22a).

4. Carrosserie de véhicule avec un auvent selon la revendication 3, **caractérisée en ce que** le corps en mousse (14 ; 24) est moussé sur la bâche (12 ; 22, 22a).

5. Carrosserie de véhicule avec un auvent selon une des revendications 1 à 4, **caractérisée en ce que** l'auvent (10 ; 20) présente un poids de 1 300 à 1 800 g/m².

6. Carrosserie de véhicule avec un auvent selon une des revendications 1 à 5, **caractérisée en ce que** le corps en mousse (14 ; 24) présente une épaisseur de 3 - 30 mm, de préférence de 3 mm.

7. Carrosserie de véhicule avec un auvent selon une des revendications 1 à 6, **caractérisée en ce que** la bâche (12 ; 22) se compose d'un matériau de bâche dont le matériau est le polyéthersulfone (PES) ou le polychlorure de vinyle (PVC).

8. Carrosserie de véhicule avec un auvent selon une des revendications 1 à 7, **caractérisée en ce que** le corps en mousse (14 ; 24) se compose de polystyrène, d'un élastomère moussé, d'une mousse PES ou d'une mousse PVC.

9. Carrosserie de véhicule avec un auvent selon une des revendications 1 à 8, **caractérisée en ce que** l'auvent (20) est constitué en trois couches et présente une bâche supérieure (22) et une bâche inférieure (22a) entre lesquelles le corps en mousse (24) est disposé.
